# EUROPÄISCHE PATENTSCHRIFT

(11) **EP 2 559 676 B1**
(45) Veröffentlichungstag und Bekanntmachung des Hinweises auf die Patenterteilung: **06.12.2017**
(21) Anmeldenummer: 11177663.9
(22) Anmeldetag: 16.08.2011
(51) Int. Cl.: C04B 28/02, C04B 28/10, C04B 28/26, C09D 1/06, C09D 7/12, C04B 111/00

(54) **KLEBER- ODER PUTZMASSE UMFASSEND EIN MINERALES BINDEMITTEL UND EIN SCHICHTSILIKAT SOWIE BESCHICHTUNGSSYSTEM UND DÄMMSYSTEM UMFASSEND EINE BESCHICHTUNGSMASSE**
ADHESIVE OR PLASTER MASS COMPRISING A MINERAL BINDER AND A LAYERED SILICATE AND COATING SYSTEM AND INSULATION SYSTEM COMPRISING A COATING MATERIAL
MATÉRIAU ADHÉSIF OU DE REVÊTEMENT COMPRENANT UN LIANT INORGANIQUE ET UN PHYLLOSILICATE, ET COMPOSITION DE REVÊTEMENT ET D'ISOLATION COMPRENANT UN MATÉRIAU DE REVÊTEMENT

(43) Veröffentlichungstag der Anmeldung: 20.02.2013
(73) Patentinhaber: STO SE & Co. KGaA, 79780 Stühlingen (DE); EMPA, 8600 Dübendorf (CH)
(72) Erfinder: Holzer, Michael, 78315 Radolfzell (DE); Restle, Christian, 78250 Tengen-Talheim (DE); Stahl, Thomas, 9604 Lütisberg (CH)
(74) Vertreter: Gottschalk, Matthias

(56) Entgegenhaltungen:
- DE-A1- 19 922 247
- DE-U1-202004 020 646
- US-A- 5 034 160
- US-A1- 2003 010 258

## Beschreibung

Die Erfindung betrifft eine Zusammensetzung zur Ausbildung einer Kleber- oder Putzschicht auf einem Bauelement oder einem bauseitigen Untergrund umfassend ein mineralisches Bindemittel sowie wenigstens einen Füll- und/oder Hilfsstoff. Die Zusammensetzung ist durch Zugabe von Wasser und/oder eines anderen Lösungsmittels zu einer pastösen Masse bzw. einer Beschichtungsmasse verarbeitbar.

Die Erfindung betrifft ferner eine Beschichtungsmasse umfassend eine solche Zusammensetzung. Darüber hinaus betrifft die Erfindung ein Beschichtungssystem sowie ein Dämmsystem umfassend eine solche Beschichtungsmasse zur Ausbildung einer ein- oder mehrlagigen Kleber- oder Putzschicht.

Die erfindungsgemäße Zusammensetzung bzw. Beschichtungsmasse zur Ausbildung einer Kleber- oder Putzschicht gelangt vorzugsweise in Innenräumen zur Anwendung. Das heißt, dass sie vorzugsweise auf der Innenseite einer Gebäudeaußenwand bzw. auf einer Innenwand aufgebracht wird. Der Auftrag kann zudem auf einer innenliegenden Decke erfolgen. Entsprechendes gilt für das ferner beanspruchte Beschichtungssystem sowie das ferner beanspruchte Dämmsystem. Die Beschichtungsmasse wird hierzu unmittelbar oder mittelbar auf die tragende Konstruktion einer Wand oder Decke aufgetragen. Die tragende Konstruktion der Wand oder Decke kann dabei massiv oder in Skelettbauweise ausgebildet sein. Im letztgenannten Fall ist auf die tragende Konstruktion zunächst eine Trägerplatte, insbesondere eine Putzträgerplatte, aufzubringen, welche die Beschichtungsmasse zur Ausbildung der ein- oder mehrlagigen Kleber- oder Putzschicht aufzunehmen vermag. Alternativ oder ergänzend zur Aufbringung der Beschichtungsmasse auf einem bauseitigen Untergrund ist die Aufbringung der Beschichtungsmasse auf einem Bauelement vorgesehen. Das Bauelement kann dann anschließend an einem bauseitigen Untergrund befestigt werden. Ein zur Aufnahme der Beschichtungsmasse geeignetes Bauelement kann beispielsweise eine Dämmplatte oder ein sonstiger vorzugsweise plattenförmiger Werkstoff sein.

### Stand der Technik

Zusammensetzungen bzw. Beschichtungsmassen der vorstehend genannten Art für das Baugewerbe sind aus dem Stand der Technik hinlänglich bekannt. Sie können Bestandteil von in Innenräumen anzubringenden Beschichtungssystemen oder Dämmsystemen sein. In Abhängigkeit von der jeweiligen Nutzung der Räume können die Systeme besonderen Belastungen durch zeitweise auftretende hohe Raumluftfeuchte ausgesetzt sein, welche sich bei nicht ausreichender Raumlüftung an den Oberflächen der Wände niederschlägt. Dies kann zu Feuchtigkeitsschäden, insbesondere zur Schimmelbildung führen. Um dies zu vermeiden, sind bereits Stoffgemische sowie hieraus hergestellte Bauwerkstoffe angegeben worden, welche dynamische Feuchtespeichereigenschaften besitzen. Derartige Stoffgemische bzw. hieraus hergestellte Bauwerkstoffe sind in der Lage, auf Feuchtelasten zu reagieren, indem sie Feuchtigkeit aufnehmen, speichern und anschließend, wenn die Raumluftfeuchte aufgrund von Lüftungsvorgängen wieder abnimmt, die gespeicherte Feuchtigkeit an die Raumluft wieder abgeben.

Aus der WO 2010/089136 A2 geht beispielsweise ein solches feuchtespeicherndes Stoffgemisch sowie eine hieraus hergestellte Feuchtespeicherplatte für das Baugewerbe, insbesondere zur Verwendung im Innenausbau, hervor. Das vorgeschlagene Stoffgemisch umfasst neben einem Bestandteil aus Luftaktivkohle ferner ein Gemisch mindestens eines Füllmittels aus einer pyrogenen Kieselsäure und ein Bindemittel in Form von flüssigem Wasserglas. Des Weiteren wird vorgeschlagen, dass das Stoffgemisch Bims und Blähtonsand als weitere Füllmittel enthält. Die aus einem solchen Stoffgemisch hergestellte Feuchtespeicherplatte zeichnet sich dadurch aus, dass sie ferner mindestens ein Verstärkungsmittel in Form von Armierungsfasern umfasst. Die Armierungsfasern dienen der Unterstützung und Sicherstellung der Eigenstabilität der Feuchtespeicherplatten.

Die in der WO 2010/089136 A2 vorgeschlagenen Feuchtespeicherplatten sollen keinen Dämmstoff darstellen oder dämmstoffartige Eigenschaften aufweisen. Aufgrund der guten Wärmeleitfähigkeit des enthaltenen Kohlenstoffs dienen sie vielmehr als Wärmeleiter, welcher die Wärme an die umgebenden Bauteile, insbesondere an massive Decken- oder Wandkonstruktionen abgibt. Sie sind demnach bevorzugt für die direkte Decken- oder Wandbefestigung konzipiert.

An die Wärmedämmung von Gebäuden werden jedoch immer höhere Anforderungen gestellt. In der Regel werden die hierzu eingesetzten, meist plattenförmigen Wärmedämmstoffe außenseitig an die Gebäude angebracht, da dies zu Lösungen führt, die im Vergleich zu Innendämmsystemen unter bauphysikalischen Gesichtspunkten weniger schadensanfällig sind. Denn die durch eine Gebäudeaußenwand stattfindende Wasserdampfdiffusion zum Ausgleich eines regelmäßig vorhandenen Dampfdruckgefälles zwischen Innen und Außen kann, insbesondere bei einer innenliegend ausgeführten Wärmedämmung, zum Tauwasserausfall führen. Das Tauwasser fällt bei einer Wasserdampfdiffusion von innen nach außen üblicherweise hinter der Wärmedämmschicht aus, da hier der Wasserdampf - bei entsprechenden Außentemperaturen - auf eine deutlich kühlere Schicht trifft. Kann das ausgefallene Tauwasser über die Gebäudeaußenwand nicht nach außen abgeführt werden, dringt die Feuchtigkeit zurück in die Wärmedämmschicht ein. Eine feuchte Wärmedämmschicht weist gegenüber einer trockenen jedoch eine deutlich geringere Wärmedämmfähigkeit auf, so dass eine ausreichende Wärmedämmung nicht mehr gewährleistet ist.

Ist die Ausbildung einer Außendämmung nicht möglich und/oder nicht erwünscht, wie dies beispielsweise bei denkmalgeschützten Fassaden der Fall sein kann, finden häufig Innendämmsysteme Einsatz. Um die vorstehend genannten Probleme im Zusammenhang mit einer Innendämmung zu vermeiden, gelangen regelmäßig zwei bekannte Systeme zum Einsatz.

Das erste bekannte System zur Innendämmung einer Gebäudeaußenwand sieht die Verwendung einer Dampfsperre vor. Die Dampfsperre wird unmittelbar oder mittelbar innenraumseitig auf die Wärmedämmschicht angebracht, so dass eine Wasserdampfdiffusion von innen nach außen unterbunden wird. Die Verwendung einer Dampfsperre ist jedoch nicht unproblematisch. Insbesondere steigt mit Verwendung einer Dampfsperre der Aufwand zur Herstellung der Gebäudeaußenwand, da die Dampfsperrschicht unterbrechungsfrei ausgeführt werden muss. Insbesondere müssen die einzelnen Dampfsperrbahnen zur Ausbildung der Dampfsperrschicht untereinander im Bereich der Stöße sowie im Bereich ihrer Anschlüsse an angrenzende Bauteile dicht verklebt werden. Ferner ist darauf zu achten, dass keine nachträgliche Beschädigung der Dampfsperrschicht erfolgt. Eine Beschädigung kann beispielsweise bereits durch Einschlagen eines Nagels verursacht werden, so dass eine dauerhafte Funktionsfähigkeit der Dampfsperre nicht zu gewährleisten ist. Denn ein Dampfdruckausgleich findet selbst durch kleinste Spalte oder Löcher statt, so dass Wasserdampf in den Aufbau der Gebäudeaußenwand gelangt.

Das zweite bekannte System sieht die Verwendung einer kapillaraktiven diffusionsoffenen Wärmedämmplatte vor. Kapillaraktive Wärmedämmplatten weisen die Eigenschaft auf, Feuchtigkeit über die Kapillare leicht aufnehmen und wieder abführen zu können. Demnach ermöglichen kapillaraktive Wärmedämmplatten bei Ausfall von Tauwasser eine schnelle Trocknung des Systems, so dass eine länger anhaltende Durchfeuchtung vermieden wird. Allerdings sinkt durch eine regelmäßig erhöhte Wasseraufnahme die Wärmedämmfähigkeit des Wärmedämmmaterials. Dies kann nur dadurch ausgeglichen werden, dass der Wärmedämmstoff in einer größeren Schichtstärke aufgebracht wird. Im Falle der Innendämmung geht damit jedoch ein Raumverlust einher.

Aus der DE 42 10 392 A1 ist ferner ein Bauelement, insbesondere eine Wärmedämmplatte, bekannt, welche mit einem Imprägnier- oder Beschichtungsmittel imprägniert bzw. beschichtet ist. Die Wärmedämmplatte wird derart an eine Wand oder Decke angebracht, dass die Imprägnierung bzw. Beschichtung dem Innenraum zugewandt ist. Die Imprägnierung bzw. Beschichtung weist einen größeren Wasserdampf-Durchlasswiderstand als die Wärmedämmplatte auf. Dadurch soll die Anordnung einer Dampfsperre entbehrlich sein. US 2003/010258 offenbart eine Wasserdampf absorbierendes Beschichtungszusammensetzung zur Anwendung in Innenräumen enthaltend a) ein mineralisches Bindemittel gewählt aus Zement und Halbhydratgips und b) 5-70 Gew. % Vermiculit. Vermiculit ist Bestandteil der Mineralklasse der Phyllosilikate. Die Beschichtungszusammensetzung wird mit einer Schichtdicke von 2 mm auf ein Kalziumsilikatplatte appliziert.

Aufgabe der vorliegenden Erfindung ist es, eine Zusammensetzung sowie eine solche Zusammensetzung umfassende Beschichtungsmasse anzugeben, welche die Ausbildung einer feuchtigkeitsregulierenden Kleber- oder Putzschicht, das heißt einer als Feuchtigkeitsspeicher bzw. -puffer dienenden Kleber- oder Putzschicht, ermöglicht. Eine feuchtigkeitsregulierende Kleber- oder Putzschicht zeichnet sich dadurch aus, dass sie eine hohe Sorptionsfähigkeit besitzt.

Darüber hinaus soll die Zusammensetzung bzw. Beschichtungsmasse zur Ausbildung einer feuchtigkeitsregulierenden Kleber- und/oder Putzschicht als Bestandteil eines Beschichtungs- oder Dämmsystems geeignet sein, das vorzugsweise in Innenräumen zur Anwendung gelangt. Ferner soll ein Dämmsystem zur Innendämmung von Gebäudeaußenwänden angegeben werden.

Zur Lösung der Aufgabe werden eine Zusammensetzung mit den Merkmalen des Anspruchs 1 und eine Beschichtungsmasse mit den Merkmalen des Anspruchs 6 vorgeschlagen. Vorteilhafte Weiterbildungen sind in den Unteransprüchen angegeben. Ferner werden ein Beschichtungssystem mit den Merkmalen des Anspruchs 7 und ein Dämmsystem mit den Merkmalen des Anspruchs 9 vorgeschlagen.

### Offenbarung der Erfindung

Die zur Ausbildung einer Kleber- oder Putzschicht auf einem Bauelement oder einem bauseitigen Untergrund vorgeschlagene Zusammensetzung umfasst ein mineralisches Bindemittel sowie wenigstens einen Füll- und/oder Hilfsstoff. Durch Zugabe von Wasser und/oder einem anderen Lösungsmittel kann die Zusammensetzung zu einer pastösen Masse verarbeitet werden. Zur Verbesserung der Sorptionsfähigkeit einer aus der Zusammensetzung ausgebildeten Kleber- oder Putzschicht enthält die Zusammensetzung erfindungsgemäß wenigstens ein Schichtsilikat als Füllstoff. Der Anteil des Schichtsilikates beträgt dabei wenigstens 3-15 Gew.-%, vorzugsweise wenigstens 5-10 Gew.-%, weiterhin vorzugsweise wenigstens 7 Gew.-%, bezogen auf die Trockenmasse. Ferner weist das Schichtsilikat eine mittlere Korngröße zwischen 0,2 mm und 2 mm, auf. Das heißt, dass das Schichtsilikat in der vorgeschlagenen Zusammensetzung als Sand und nicht als feines Mehl vorliegt.

Der Einsatz von Schichtsilikaten in derartigen Zusammensetzungen ist aus dem Stand der Technik bekannt. Allerdings liegt ihr Anteil deutlich unter 3 Gew.-%, da sie vorrangig als Hilfsstoff, insbesondere als Verdickungsmittel eingesetzt werden. Es wurde jedoch gefunden, dass bei einem Schichtsilikatanteil von wenigstens 3 Gew.-%, vorzugsweise 5 Gew.-%, weiterhin vorzugsweise wenigstens 7 Gew.-%, die Sorptionsfähigkeit einer aus der Zusammensetzung ausgebildeten Kleber- oder Putzschicht wesentlich verbessert wird, so dass die Schicht die Funktion eines Feuchtigkeitsspeichers zu übernehmen vermag. Der maximale Anteil des Schichtsilikates sollte jedoch 15 Gew.-%, vorzugsweise 10 Gew.-% nicht überschreiten.

Eine feuchtigkeitsspeichernde Funktion wird darüber hinaus den bekannten Kalk- und Lehmputzen zugeschrieben. Kalkputze sind relativ unempfindlich in Bezug auf Feuchtigkeitseinwirkungen und können daher Einsatz in Feuchträumen, wie beispielsweise in häuslichen Bädern, finden. Die Feuchtesorption wird dabei durch das Bindemittel, nämlich Kalkhydrat oder hydraulischer Kalk, bewirkt. Als nachteilig erweist sich jedoch, dass sich die Sorptionsfähigkeit des Kalkputzes aufgrund fortschreitender Carbonatisierung im Laufe der Zeit verändert. Bei Lehmputzen dagegen werden Schichtsilikate als Bindemittel eingesetzt. Unter Feuchtigkeitseinfluss erweicht das Bindemittel jedoch, so dass der Einsatz von Lehmputzen in Feuchträumen nur bedingt bzw. gar nicht möglich ist.

Gegenüber den bekannten Kalk- oder Lehmputzen weist eine aus einer erfindungsgemäßen Zusammensetzung ausgebildete Kleber- oder Putzschicht den Vorteil auf, dass die Sorptionsfähigkeit über den Anteil des Schichtsilikates steuerbar ist. Das Schichtsilikat dient somit als funktionaler Füllstoff. Darüber hinaus ist eine aus einer erfindungsgemäßen Zusammensetzung ausgebildete Kleber- oder Putzschicht in der Lage, deutlich mehr Feuchtigkeit aufzunehmen als eine entsprechend stark ausgebildete Schicht aus Kalk- oder Lehmputz. Dies wird unter anderem auf die Verwendung wenigstens eines Schichtsilikats als Füllstoff zurückgeführt. Zudem ist die erfindungsgemäße Zusammensetzung vielseitig einsetzbar, beispielsweise als Kleber- oder als Putzschicht, wobei der Begriff Putzschicht sowohl eine Armierungsschicht, als auch eine Oberputzschicht umfassen kann. Ferner fallen unter den Begriff Putzschicht alle putzartigen Zwischenschichten, welche dem Ausgleich von Unebenheiten des Untergrundes und/oder als Haftvermittler bzw. Haftbrücke dienen. Eine aus einer erfindungsgemäßen Zusammensetzung ausgebildete Oberputzschicht kann zudem weitere Beschichtungen, wie beispielsweise einen ein- oder mehrlagigen Farbanstrich, aufnehmen. Demgegenüber ist die Auswahl verwendbarer Anstrichmaterialien insbesondere bei Lehmputzen stark begrenzt.

Bevorzugt enthält die Zusammensetzung keine oder weniger als 5 Gew.-% organische Bestandteile. Der geringe Anteil organischer Bestandteile - sofern überhaupt vorhanden - wirkt einem Schimmelpilzbefall entgegen. Denn die überwiegend mineralischen bzw. anorganischen Bestandteile der Zusammensetzung tragen zu einem hohen pH-Wert der aus der Zusammensetzung ausgebildeten Kleber- oder Putzschicht und damit zu einem basischen Klima bei. Da die Vermehrung von Schimmelpilzen ein eher neutrales Klima erfordert, das heißt einen pH-Wert im Bereich von 7, kann durch die Einstellung eines möglichst hohen pH-Wertes einem Schimmelpilzbefall entgegen gewirkt werden.

Ferner wird vorgeschlagen, dass die Zusammensetzung Zement, vorzugsweise Weißzement, Wasserglas, Kalkhydrat und/oder hydraulischen Kalk als mineralisches Bindemittel enthält. Zum Einen trägt die Verwendung derartiger Bindemittel zu einem hohen pH-Wert bei, zum Anderen kann - insbesondere bei Verwendung von Weißzement - eine sehr helle Putzschicht zur Aufnahme etwaiger weiterer heller Farbanstriche ausgebildet werden. Die zur Ausbildung der hellen Putzschicht vorgesehene Beschichtungsmasse kann durch Zugabe von Farbpigmenten zudem beliebig abgetönt werden, so dass ein großer Spielraum hinsichtlich der farblichen Gestaltung einer Putzschicht, insbesondere einer Oberputzschicht, besteht. Die vorstehend genannten mineralischen Bindemittel können jeweils allein oder in Kombination zum Einsatz gelangen.

Gemäß einer bevorzugten Ausführungsform ist Sepiolith als Schichtsilikat in der erfindungsgemäßen Zusammensetzung enthalten. Sepiolith ist ein Mineral, das wegen seiner porösen Struktur sehr saugfähig ist. Es ist als Schichtsilikat bekannt und wird nach der Mineralsystematik der Mineralklasse der Silikate und Germanate zugeordnet. Der Mineralklasse gehören unter anderem auch die Tonminerale Bentonit und Montmorillonit an. Alternativ oder ergänzend können auch diese Mineralien als Schichtsilikat in der erfindungsgemäßen Zusammensetzung enthalten sein. Versuche mit allen drei Mineralien (Sepiolith, Bentonit und Montmorillonit) haben jedoch gezeigt, dass bei Einsatz von Sepiolith, insbesondere von Sepiolithsanden, eine aus der Zusammensetzung ausgebildete Kleber- oder Putzschicht ein deutlich geringeres Schwindverhalten besitzt. Insofern finden bevorzugt Sepiolith als Schichtsilikat und weiterhin bevorzugt Sepiolithsande Verwendung. Denn einen wesentlichen Einfluss hat in diesem Zusammenhang nicht nur die Wahl des Schichtsilikats, sondern auch die Korngröße des gewählten Schichtsilikats. So weist eine aus einer Sepiolithsande enthaltenden Zusammensetzung hergestellte Putzschicht ein geringeres Schwindverhalten als eine Putzschicht auf, welche aus einer Zusammensetzung hergestellt wurde, die ebenfalls Sepiolith jedoch in Form eines feinen Mehls enthält. Wie bereits vorstehend erwähnt, wird insbesondere eine mittlere Korngröße von 0,1 mm bis 3 mm, vorzugsweise von 0,2 mm bis 2 mm als vorteilhaft angesehen. Weiterhin bevorzugt liegt die mittlere Korngröße bei 0,25 mm bis 1,3 mm.

Gemäß einer weiteren bevorzugten Ausführungsform ist das Schichtsilikat in wenigstens zwei Fraktionen enthalten, wobei sich die Fraktionen hinsichtlich der mittleren Korngröße des Schichtsilikats unterscheiden. Eine erste Fraktion kann beispielsweise ein Schichtsilikat, wie beispielsweise Sepiolith, mit einer mittleren Korngröße zwischen 0,3 mm und 0,6 mm aufweisen, während als zweite Fraktion ein Schichtsilikat mit einer mittleren Korngröße zwischen 0,6 mm und 1,3 mm eingesetzt wird. Vorzugsweise ist jede Fraktion zu gleichen Gewichtsanteilen vorhanden. Beispielsweise kann der Gewichtsanteil jeder Fraktion 5 Gew.-% betragen. Bei zwei Fraktionen zu jeweils 5 Gew.-% sind in der Zusammensetzung insgesamt 10 Gew.-% eines oder mehrerer Schichtsilikate unterschiedlicher Korngröße enthalten.

Die zur Lösung der eingangs genannten Aufgabe ferner vorgeschlagene Beschichtungsmasse zur Ausbildung einer Kleber- oder Putzschicht auf einem Bauelement oder einem bauseitigen Untergrund umfasst eine erfindungsgemäße Zusammensetzung sowie Wasser und/oder ein anderes Lösungsmittel. Konkrete Beispiele einer solchen Beschichtungsmasse werden nachfolgend genannt.

Durch die Zugabe von Wasser und/oder eines anderen Lösungsmittels wird aus der trockenen Zusammensetzung eine pastöse Masse, die dann weiter verarbeitbar ist. Zur Ausbildung von Kleber- oder Putzschichten kann die pastöse Masse beispielsweise mittels Spachteln, Spritzen, Rollen oder Streichen auf ein Bauelement und/oder einen bauseitigen Untergrund aufgetragen werden. Der Auftrag erfolgt vorzugsweise vollflächig. Etwaige Unebenheiten des Untergrundes werden dabei ausgeglichen. Der Auftrag kann zudem in mehreren Schichten bzw. Lagen erfolgen.

Das ferner vorgeschlagene Beschichtungssystem umfasst eine erfindungsgemäße Beschichtungsmasse zur Ausbildung einer ein- oder mehrlagigen Kleber- oder Putzschicht. Die Wasserdampfdiffusionswiderstandszahl µ einer aus der Beschichtungsmasse ausgebildeten Kleber- oder Putzschicht beträgt dabei vorzugsweise < 25, weiterhin vorzugsweise < 20. Dadurch ist sichergestellt, dass die Kleber- oder Putzschicht die Funktion eines Feuchtigkeitsspeichers bzw. -puffers zu übernehmen vermag. Das Beschichtungssystem ist vorrangig zur Verwendung in Innenräumen, insbesondere in Innenräumen mit einer zumindest zeitweise hohen Raumluftfeuchte, vorgesehen. Darüber hinaus ist das Beschichtungssystem in Innenräumen zur Regulierung der Raumluftfeuchte einsetzbar. Insofern ist das Beschichtungssystem insbesondere auch für den Einsatz in feuchteempfindlichen Räumen, wie Archiven, Ausstellungsräumen und dergleichen geeignet.

Das vorgeschlagene Beschichtungssystem kann ferner eine wasserdampfdiffusionsoffene Farbe, insbesondere eine Silikatfarbe, zur Ausbildung einer Endbeschichtung umfassen. Durch Verwendung einer wasserdampfdiffusionsoffenen Farbe, insbesondere Silikatfarbe, werden die Feuchtigkeitsspeichereigenschaften der darunter liegenden als Feuchtigkeitsspeicher bzw. -puffer dienenden Kleber- oder Putzschicht nicht oder nur unwesentlich verändert. Zudem ermöglicht eine entsprechende Endbeschichtung eine vielseitige farbliche Gestaltung der das Beschichtungssystem aufnehmenden Wandoberfläche.

Des Weiteren wird ein Dämmsystem umfassend eine erfindungsgemäße Beschichtungsmasse zur Ausbildung einer ein- oder mehrlagigen Kleber- oder Putzschicht vorgeschlagen, wobei das Dämmsystem ferner wenigstens eine Dämmplatte umfasst. Die Wasserdampfdiffusionswiderstandszahl µ der Dämmplatte beträgt dabei vorzugsweise < 20, weiterhin vorzugsweise < 10. Eine solche Dämmplatte ist wasserdampfdiffusionsoffen, so dass Wasserdampf aus der Raumluft durch die Dämmplatte hindurch bis zur einer als Feuchtigkeitsspeicher bzw. -puffer dienenden Kleber- oder Putzschicht vorzudringen vermag. Kehrt sich das Dampfdruckgefälle um, das heißt nimmt die Raumluftfeuchte über die Zeit wieder ab, beispielsweise aufgrund einer erfolgten Raumlüftung, diffundiert der Wasserdampf in umgekehrter Richtung durch die Dämmplatte hindurch und wird schließlich wieder an die Raumluft abgegeben.

In einem solchen Dämmsystem kann die Beschichtungsmasse sowohl der Ausbildung einer Kleberschicht, als auch der Ausbildung einer Putzschicht dienen. Beispielsweise kann die Dämmplatte mittels der Beschichtungsmasse auf einem bauseitigen Untergrund verklebt werden. Die Beschichtungsmasse wird hierzu bevorzugt vollflächig auf die Dämmplatte und/oder den bauseitigen Untergrund aufgebracht. Darüber hinaus können etwaige Unebenheiten des bauseitigen Untergrundes vor dem Verkleben der Dämmplatte durch Aufbringen einer Putzschicht aus der erfindungsgemäßen Beschichtungsmasse egalisiert werden. Schließlich kann auf die mit dem Untergrund verklebte Dämmplatte eine ein- oder mehrlagige Putzschicht aufgebracht werden. Die mehrlagige Putzschicht kann einen Armierungsputz und einen Oberputz umfassen, wobei die erfindungsgemäße Beschichtungsmasse sowohl zur Ausbildung des Armierungsputzes, als auch zur Ausbildung des Oberputzes verwendet werden kann.

Als Dämmplatte findet vorzugsweise eine Wärmedämmplatte Einsatz, das heißt, dass die Dämmplatte vorrangig wärmedämmende Eigenschaften besitzt. Alternativ oder ergänzend kann die Dämmplatte auch schalldämmende Eigenschaften aufweisen.

Weiterhin vorzugsweise weist die Dämmplatte hydrophobe Eigenschaften auf. Das heißt, dass eine Wasseraufnahme der Dämmplatte weitgehend ausgeschlossen ist, während die gewählte Wasserdampfdiffusionswiderstandszahl µ < 20, vorzugsweise µ < 10, weiterhin die erforderliche Wasserdampfdiffusion durch die Dämmplatte hindurch ermöglicht. Die Dämmplatte ist demnach bevorzugt kapillarinaktiv.

Darüber hinaus ist aber auch der Einsatz kapillaraktiver Dämmplatten möglich, sofern auf der der Wand und/oder dem Raum zugewandten Seite der Dämmplatte eine feuchtigkeitsregulierende Kleber- und/oder Putzschicht vorgesehen ist. Die Kleber- und/oder Putzschicht muss in der Lage sein, Feuchtigkeit, vor allem ausgefallenes Tauwasser, aufzunehmen, temporär zu speichern und im Laufe der Zeit wieder abzugeben. Dies ist bei Verwendung einer erfindungsgemäßen Zusammensetzung bzw. Beschichtungsmasse zur Ausbildung der Kleber- und/oder Putzschicht gewährleistet.

Bei Ausbildung einer entsprechenden feuchtigkeitsregulierenden Kleber- und/oder Putzschicht kann auf die Anordnung einer Dampfsperre innerhalb des Dämmsystems vollständig verzichtet werden. Mit Verzicht auf eine Dampfsperre steigt die Verarbeitungssicherheit des Systems. Dies gilt im Übrigen unabhängig davon, welcher Dämmstoff als Dämmplatte zum Einsatz gelangt. Kommt es zum Tauwasserausfall, wird das Tauwasser nahezu vollständig von der feuchtigkeitsregulierenden Schicht aufgenommen und temporär gespeichert. Eine länger anhaltende Durchfeuchtung der Dämmung wird somit vermieden. Die Verwendung einer erfindungsgemäßen Zusammensetzung bzw. Beschichtungsmasse zur Ausbildung der feuchtigkeitsregulierenden Kleber- und/oder Putzschicht hat dabei ferner die Wirkung, dass der Bildung von Schimmelpilz entgegengewirkt wird. Dies ist - wie bereits erwähnt - auf den hohen pH-Wert der feuchtigkeitsregulierenden Kleber- oder Putzschicht zurückzuführen.

Des Weiteren wird vorgeschlagen, dass das Dämmsystem eine wasserdampfdiffusionsoffene Farbe, insbesondere eine Silikatfarbe, zur Ausbildung einer Endbeschichtung umfasst. Vorzugsweise wird die wasserdampfdiffusionsoffene Farbe, insbesondere Silikatfarbe, auf einer ein- oder mehrlagigen Putzschicht aufgetragen, die innenraumseitig auf der Dämmplatte des Dämmsystems aufgebracht ist. Wenigstens eine Lage der ein- oder mehrlagigen Putzschicht ist zudem weiterhin bevorzugt durch die Einlage eines Armierungsgewebes verstärkt. Die auf die Putzschicht aufgetragene Endbeschichtung schließt das Dämmsystem raumseitig ab und verleiht der Oberfläche eine optisch ansprechende, farbige Erscheinung.

Die Vorteile der Erfindung, welche eine Zusammensetzung und eine Beschichtungsmasse zur Ausbildung einer feuchtigkeitsregulierenden Kleber- oder Putzschicht sowie ein Beschichtungs- und Dämmsystem mit einer solchen Kleber- und/oder Putzschicht umfasst, sind insbesondere darin zusehen, dass die Verwendung in Innenräumen ein gesundes und angenehmes Raumklima schafft. Denn während der Tauperiode wird über die feuchtigkeitsregulierende Kleber- und/oder Putzschicht der Raumluft Feuchtigkeit entzogen und während der Verdunstungsperiode wieder zugeführt. Feuchteschwankungen können somit kompensiert werden.

Vorteilhafterweise ist die Speicherfähigkeit der feuchtigkeitsregulierenden Kleber- und/oder Putzschicht derart eingestellt, dass über die Zeitdauer einer Tauperiode hinweg die Aufnahmefähigkeit von Feuchtigkeit gewährleistet ist. Die Zeitdauer einer Tauperiode ist einzelfallabhängig. Den Einzelfall bestimmende Einflussfaktoren bilden die Jahreszeit, die Tageszeit, die geographische Lage des Gebäudes, die Ausrichtung der Gebäudeaußenwand in Bezug auf die Himmelsrichtung und die konkrete Nutzung des von der Gebäudeaußenwand oder Innenwand begrenzten Innenraums, um nur einige zu nennen. Sämtliche Faktoren haben Einfluss auf die Temperatur und den Feuchtigkeitsgehalt der jeweils an die Gebäudeaußenwand bzw. Innenwand angrenzenden Grenzschichten. Die Tauperiode kann dabei lediglich eine Nacht oder einen ganzen Winter dauern.

Die Fähigkeit der Kleber- oder Putzschicht, Feuchtigkeit aufzunehmen und temporär zu speichern ist ferner über die Schichtstärke einstellbar. Bevorzugt wird die feuchtigkeitsregulierende Kleber- oder Putzschicht in einer Schichtstärke von 1 mm bis 20 mm, weiterhin bevorzugt von 2 mm bis 10 mm, aufgetragen. Zur Ausbildung einer entsprechenden Schichtstärke kann die Beschichtungsmasse in einer oder mehreren Lagen aufgebracht werden. Die angegebenen Schichtstärken bezieht sich demnach auf eine ein- oder mehrlagige Kleber- oder Putzschicht.

Nachfolgend werden konkrete Ausführungsbeispiele erfindungsgemäßer Zusammensetzungen zur Ausbildung feuchtigkeitsregulierender Kleber- oder Putzschichten genannt.

### Ausführungsbeispiel 1:

Eine bevorzugte erfindungsgemäße Zusammensetzung zur Ausbildung einer feuchtigkeitsregulierenden Kleberschicht weist folgende Bestandteile auf:

| | |
|---|---|
| 22,0 Gew.-% | Weißzement und Kalkhydrat als mineralische Bindemittel |
| 65,5 Gew.-% | Füllstoffe, beispielsweise Kalksteinmehl und/oder Quarzsand |
| 10,0 Gew.-% | Sepiolithsand als funktionaler Füllstoff und |
| 2,5 Gew.-% | Additive, insbesondere Wasserrückhaltemittel, Luftporenbildner, Redispersionspulver und/oder rheologische Mittel. |

### Ausführungsbeispiel 2:

Eine bevorzugte erfindungsgemäße Zusammensetzung zur Ausbildung einer feuchtigkeitsregulierenden Putzschicht weist folgende Bestandteile auf:

| | |
|---|---|
| 23,0 Gew.-% | Weißzement und Kalkhydrat als mineralische Bindemittel |
| 68,0 Gew.-% | Füllstoffe, beispielsweise Kalksteinmehl und/oder Quarzsand |
| 7,0 Gew.-% | Sepiolithsand als funktionaler Füllstoff und |
| 2,0 Gew.-% | Additive, insbesondere Wasserrückhaltemittel, Luftporenbildner und/oder rheologische Mittel. |

Versuche haben gezeigt, dass eine aus der Zusammensetzung gemäß dem Ausführungsbeispiel 1 ausgebildete Kleberschicht unter realitätsnahen Bedingungen (90% Luftfeuchte) mehr als 20g Luftfeuchtigkeit aus der Umgebungsluft als flüssiges Wasser pro Kilogramm Beschichtungsmasse aufzunehmen und einzulagern vermag, um es später an die Umgebungsluft wieder abzugeben. Das ist mehr als die vierfache Menge Wasser, welche eine herkömmliche Kleberschicht ohne Sepiolithanteil aufzunehmen vermag.

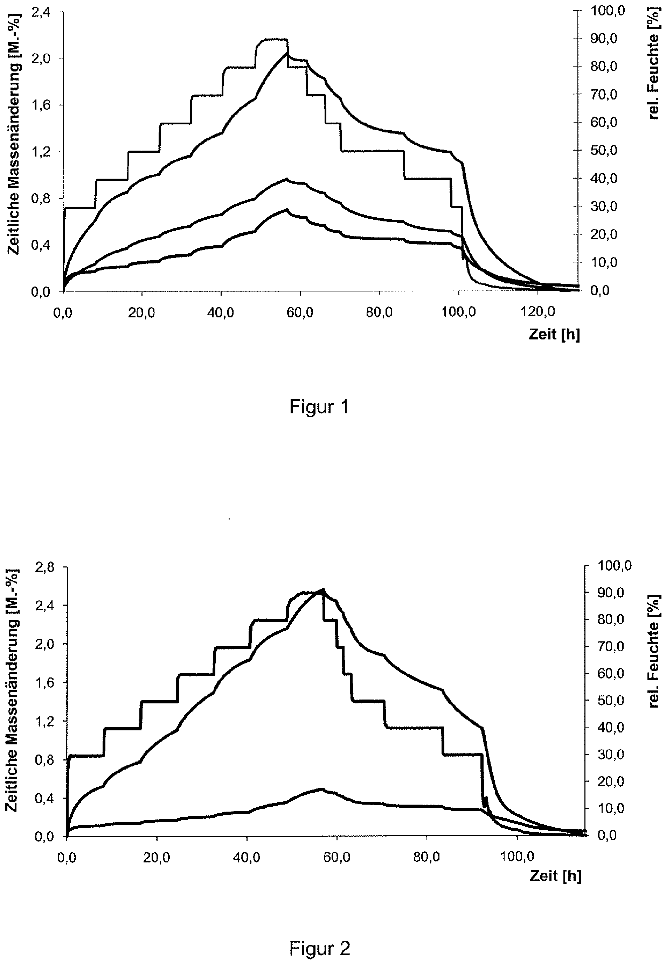

Das Ergebnis eines solchen Versuchs ist in der Grafik der Figur 2 dargestellt. Die Grafik zeigt das Wasseraufnahme- und Wasserabgabevermögen über der Zeit einer ersten und einer zweiten Kleberschicht. Die erste Kleberschicht wurde aus einer Zusammensetzung gemäß dem Ausführungsbeispiel 1 ausgebildet (obere Kurve). Bei der zweiten Kleberschicht handelt es sich um eine herkömmliche Kleberschicht ohne Sepiolithanteil (untere Kurve). Die gestuft verlaufende Kurve gibt die relative Feuchte an.

Die Kleberschichten wurden in derselben Schichtstärke aufgetragen und bei 40°C / 0% relative Feuchte getrocknet. Danach wurde die Temperatur auf 23°C abgesenkt und die relative Feuchte auf 30% angehoben. Alle 8 Stunden wurde dann die relative Feuchte schrittweise um jeweils 10% bis auf 90% erhöht (Sorptionsphase). Danach wurde die relative Feuchte schrittweise um jeweils 10% wieder abgesenkt (Desorptionsphase). Der Abstand der oberen Kurve zur unteren Kurve entspricht einem vierfach höheren Sorptionsvermögen der Sepiolith enthaltenden Kleberschicht gegenüber einer herkömmlichen Kleberschicht ohne Sepiolithanteil.

Die Grafik der Figur 1 zeigt das Wasseraufnahme- und Wasserabgabevermögen über der Zeit eines Sepiolith enthaltenden Sorptionsputzes im Vergleich zu einem handelsüblichen Lehmputz bzw. Kalkputz entsprechender Stärke. Die obere Kurve zeigt das Wasseraufnahme- und Wasserabgabevermögen des Sepiolith enthaltenden Sorptionsputzes, während die mittlere Kurve das Vermögen eines handelsüblichen Lehmputzes und die untere Kurve das Vermögen eines handelsüblichen Kalkputzes wiedergibt. Die gestuft verlaufende Kurve gibt wiederum die relative Feuchte an.

Wie der Grafik der Figur 1 zu entnehmen ist, liegt auch das Wasseraufnahme- und Wasserabgabevermögen eines Lehm- oder Kalkputzes deutlich unter dem eines Sepiolith enthaltenden Sorptionsputzes.

Ferner wurden Versuche durchgeführt, welche Aufschluss über das Schwindungsverhalten einer aus einer erfindungsgemäßen Zusammensetzung ausgebildeten Beschichtungsmasse geben. Die Versuche wurden an Beschichtungsmassen ohne und mit einem Schichtsilikat als Aktivsubstanz durchgeführt. Als Schichtsilikat bzw. Aktivsubstanz fanden zum Einen Sepiolithsande, zum Anderen Sepiolithmehl Einsatz. Ferner wurden Versuche mit Beschichtungsmassen durchgeführt, welche Bentonit und Montmorillonit als Aktivsubstanz enthielten. Die Schwindung wurde nach der Graf-Kaufmann-Methode bestimmt. Bei dieser Methode wird ein Prisma der Abmessungen 4 cm x 4 cm x 16 cm in einer Schalung hergestellt, nach einem Tag ausgeschalt und die Längenveränderungen beim Trocknen in vorgegebenen zeitlichen Abständen ermittelt. Die ermittelten Längenänderungen werden in mm/m angegeben. Nach DIN 52450 findet im mineralischen Bereich insbesondere der 28-Tage Wert Beachtung.

Wie der nachfolgenden tabellarischen Gegenüberstellung der ermittelten Längenänderungen mit Blick auf den 28-Tage Wert zu entnehmen ist, zeigt eine Beschichtungsmasse ohne Aktivsubstanz die geringste Schwindung. Hierauf folgt eine Beschichtungsmasse, welche Sepiolithsande enthält. Bei Verwendung von Sepiolithmehl (mittlere Korngröße < 0,1 mm) nimmt das Schwinden deutlich zu. Ein ähnliches Verhalten zeigt eine Beschichtungsmasse, welche Bentonit als Aktivsubstanz enthält. Die deutlichsten Längenänderungen wurden allerdings an dem Probekörper gemessen, welcher Montmorillonit als Aktivsubstanz enthielt.

| Schwindverhalten (Messung nach der Graf-Kaufmann Methode): | | | | | |
|---|---|---|---|---|---|
| | ohne Aktivsubstanz | 10 Gew.-% Sephiolithsand | 10 Gew.-% Spiolithmehl | 10 Gew.-% Bentonit | 10 Gew.-% Montmorillonit |
| Wasserbedarf | 26,9 | 34,3 | 35,4 | 37 | 37,7 |
| Ausbreitungsmaß | 16,4 | 16,1 | 16,5 | 16,3 | 17 |
| | | | | | |
| Schwindg. n. 7 T. | 1,17 | 1,22 | 2,01 | 3,1 | 3,56 |
| Schwindg. n. 28 T. | 1,48 | 2,54 | 3,7 | 3,76 | 4,46 |

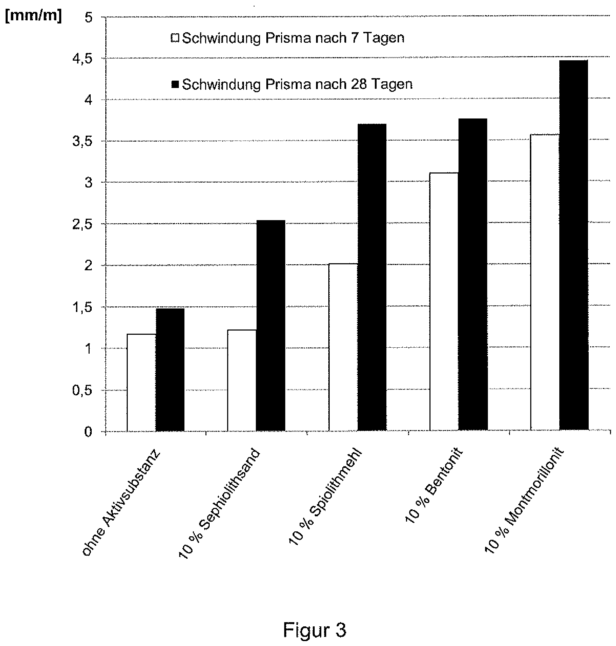

Die Ergebnisse sind ferner als Grafik in der Figur 3 dargestellt, wobei die Längenänderungen der einzelnen Probekörper nach 7 und nach 28 Tagen als Balken aufgetragen wurden.

## Patentansprüche

1. Kleber- oder Putzmasse zur Ausbildung einer Kleber- oder Putzschicht auf einem Bauelement oder einem bauseitigen Untergrund, umfassend ein mineralisches Bindemittel sowie wenigstens einen Füll- und/oder Hilfsstoff, welche durch Zugabe von Wasser und/oder einem anderen Lösungsmittel zu einer pastösen Masse verarbeitet worden sind, wobei
die Kleber- oder Putzmasse zur Verbesserung der Sorptionsfähigkeit einer hieraus ausgebildeten Kleber- oder Putzschicht wenigstens ein Schichtsilikat als Füllstoff enthält, wobei der Anteil des Schichtsilikates 3 - 15 Gew.-%, vorzugsweise 5 - 10 Gew.-%, beträgt und wobei das Schichtsilikat eine mittlere Korngröße zwischen 0,2 mm und 2 mm aufweist.

2. Kleber- oder Putzmasse nach Anspruch 1,
**dadurch gekennzeichnet, dass** die Kleber- oder Putzmasse keine oder weniger als 5 Gew.-% organische Bestandteile enthält.

3. Kleber- oder Putzmasse nach Anspruch 1 oder 2,
**dadurch gekennzeichnet, dass** die Kleber- oder Putzmasse Zement, Weißzement, Wasserglas, Kalkhydrat und/oder hydraulischen Kalk als mineralisches Bindemittel enthält.

4. Kleber- oder Putzmasse nach einem der vorhergehenden Ansprüche,
**dadurch gekennzeichnet, dass** Sepiolith als Schichtsilikat enthalten ist.

5. Kleber- oder Putzmasse nach einem der vorhergehenden Ansprüche,
**dadurch gekennzeichnet, dass** das Schichtsilikat in wenigstens zwei Fraktionen enthalten ist, wobei sich die Fraktionen hinsichtlich der mittleren Korngröße des Schichtsilikats unterscheiden.

6. Beschichtungssystem umfassend eine Kleber- oder Putzmasse nach einem der vorhergehenden Ansprüche zur Ausbildung einer ein- oder mehrlagigen Kleber- oder Putzschicht, wobei die Wasserdampfdiffusionswiderstandszahl µ der hieraus ausgebildeten ein- oder mehrlagigen Kleber- oder Putzschicht < 25, vorzugsweise < 20 beträgt.

7. Beschichtungssystem nach Anspruch 6,
**dadurch gekennzeichnet, dass** das Beschichtungssystem ferner eine wasserdampfdiffusionsoffene Farbe, insbesondere Silikatfarbe, zur Ausbildung einer Endbeschichtung umfasst.

8. Dämmsystem umfassend eine Kleber- oder Putzmasse nach einem der Ansprüche 1 bis 5 zur Ausbildung einer ein- oder mehrlagigen Kleber- oder Putzschicht sowie ferner umfassend wenigstens eine Dämmplatte, wobei die Wasserdampfdiffusionswiderstandszahl µ der Dämmplatte < 20, vorzugsweise < 10 beträgt.

9. Dämmsystem nach Anspruch 8,
**dadurch gekennzeichnet, dass** das Dämmsystem ferner eine wasserdampfdiffusionsoffene Farbe, insbesondere Silikatfarbe, zur Ausbildung einer Endbeschichtung umfasst.

## Claims

1. An adhesive or plaster compound for creating an adhesive or plaster layer on a building unit or a base at the construction end comprising a mineral binding agent and at least one filling and/or auxiliary material which have been worked into a paste-like compound through the addition of water and/or another solvent, wherein the adhesive or plaster compound contains at least one layer silicate as the filling material to improve the sorption capacity of an adhesive or plaster layer created therefrom, wherein the proportion of the layer silicate is 3 - 15 % by wt, preferably 5 - 10 % by wt, and wherein the layer silicate has a mean grain size of between 0.2 mm and 2 mm.

2. The adhesive or plaster compound according to claim 1, **characterized in that** the adhesive or plaster compound contains no or less than 5 % by wt. organic constituents.

3. The adhesive or plaster compound according to claim 1 or 2,
**characterized in that** the adhesive or plaster compound contains cement, white cement, water glass, hydrated lime and/or hydraulic lime as the mineral binding agent.

4. The adhesive or plaster compound according to one of the preceding claims,
**characterized in that** sepiolite is contained as the layer silicate.

5. The adhesive or plaster compound according to one of the preceding claims,
**characterized in that** the layer silicate is contained in at least two fractions, wherein the fractions differ in respect of the mean grain size of the layer silicate.

6. A coating system comprising an adhesive or plaster compound according to one of the preceding claims for creating a single-layer or multi-layer adhesive or plaster layer, wherein the water vapour diffusion resistance coefficient µ of the single-layer or multi-layer adhesive or plaster layer formed therefrom is < 25, preferably < 20.

7. The coating system according to claim 6, **characterized in that** the coating system in addition comprises a paint open to water vapour diffusion, in particular a silicate paint, to create a top coating.

8. An insulation system comprising an adhesive or plaster compound according to one of claims 1 to 5 for creating a single-layer or multi-layer adhesive or plaster layer and also, in addition, comprising at least one insulating board, wherein the water vapour diffusion resistance coefficient µ of the insulating board is < 20, preferably < 10.

9. The insulation system according to claim 8, **characterized in that** the insulation system additionally comprises a paint open to water vapour diffusion, in particular a silicate paint, for creating a top coating.

## Revendications

1. Masse d'adhésif ou d'enduit destinée à créer une couche d'adhésif ou d'enduit sur un élément de construction ou sur un fond côté bâtiment, comprenant un liant minéral, ainsi qu'au moins un agent de charge et/ou un adjuvant, lesquels, par ajout d'eau et/ou d'un autre solvant ont été mis en oeuvre en une masse pâteuse,
pour améliorer la capacité de sorption d'une couche d'adhésif ou d'enduit créée à partir de celle-ci, la masse d'adhésif ou d'enduit contenant au moins un phyllosilicate en tant qu'agent de charge, la part de phyllosilicate s'élevant à de 3 à 15 % en poids, de préférence à de 5 à 10 % en poids, et le phyllosilicate présentant une grosseur de grain moyenne comprise entre 0,2 mm et 2 mm.

2. Masse d'adhésif ou d'enduit selon la revendication 1,
**caractérisée en ce que** la masse d'adhésif ou d'enduit ne contient pas ou moins de 5 % en poids de composants organiques.

3. Masse d'adhésif ou d'enduit selon la revendication 1 ou 2,
**caractérisée en ce que** la masse d'adhésif ou d'enduit contient du ciment, du ciment blanc, du silicate de soude, de l'hydrate de chaux et/ou de la chaux hydraulique en tant qu'agent liant minéral.

4. Masse d'adhésif ou d'enduit selon l'une quelconque des revendications précédentes,
**caractérisée en ce que** de la sépiolite est contenue en tant que phyllosilicate.

5. Masse d'adhésif ou d'enduit selon l'une quelconque des revendications précédentes, **caractérisée en ce que** le phyllosilicate est contenu en au moins deux fractions, les fractions se différenciant au niveau de la grosseur de grains moyenne du phyllosilicate.

6. Système de revêtement comprenant une masse d'adhésif ou d'enduit selon l'une quelconque des revendications précédentes pour créer une couche d'adhésif ou d'enduit monocouche ou multicouches, l'indice de résistance à la diffusion de vapeur d'eau µ de la couche d'adhésif ou d'enduit monocouche ou multicouches créée à partir de celle-ci étant < 25, de préférence < 20.

7. Système de revêtement selon la revendication 6,
**caractérisé en ce que** le système de revêtement comprend par ailleurs une peinture permettant la diffusion de vapeur d'eau, notamment une peinture au silicate, pour créer un revêtement de finition.

8. Système d'isolation comprenant une masse d'adhésif ou d'enduit selon l'une quelconque des revendications 1 à 5, pour créer une couche d'adhésif ou d'enduit monocouche ou multicouches, et comprenant par ailleurs au moins une dalle isolante, l'indice de résistance à la diffusion de vapeur d'eau µ de la dalle isolante étant < 20, de préférence < 10.

9. Système d'isolation selon la revendication 8,
**caractérisé en ce que** le système d'isolation comprend par ailleurs une peinture permettant la diffusion de vapeur d'eau, notamment une peinture au silicate, pour créer un revêtement de finition.
